# EUROPEAN PATENT APPLICATION

(11) **EP 3 203 809 A2**
(43) Date of publication of application: **09.08.2017**
(21) Application number: 15845583.2
(22) Date of filing: 25.09.2015
(51) Int. Cl.: H05B 3/84

(54) **HEATING ELEMENT AND MANUFACTURING METHOD THEREFOR**

(30) Priority: 29.09.2014 KR 20140130448
(71) Applicant: LG Chem, Ltd., Seoul 07336 (KR)
(72) Inventor: KIM, Sarah, Daejeon 34122 (KR); CHOI, Hyeon, Daejeon 34122 (KR); SEONG, Jiehyun, Daejeon 34122 (KR); LEE, Donghyun, Daejeon 34122 (KR); LEE, Seung Heon, Daejeon 34122 (KR); KIM, Jooyeon, Daejeon 34122 (KR)
(74) Representative: Goddar, Heinz J.
(86) International application number: PCT/KR2015/010195
(87) International publication number: WO 2016/052949

(57) **Abstract**

This application relates to a heating unit and a method for manufacturing the same. The heating unit according to an exemplary embodiment of this application includes a substrate, a transmittance adjusting layer which is provided on the substrate and includes one or more selected from a group consisting of Ni, Cr, Mo, Pt, and Ti; and a conductive heating pattern provided on the transmittance adjusting layer.

## Description

### [Technical Field]

This application claims priority from Korean Patent Application No. 10-2014-0130448 filed on September 29, 2014, in the KIPO, the disclosure of which is incorporated herein by reference in its entirety.

This application relates to a heating unit and a method for manufacturing the same.

### [Background Art]

In winter or on rainy days, frost is formed on a glass surface of a vehicle because of a difference between temperatures of the outside and inside of the vehicle. In addition, in the case of an indoor ski resort, a dew condensation phenomenon occurs because of a difference between temperatures of the inside where there is a slope and the outside of the slope. In order to solve the above-mentioned problem, a heating glass has been developed. The heating glass uses a concept where after attaching a hot line sheet onto the glass surface or directly forming a hot line on the glass surface, electricity is applied to both terminals of the hot line to generate heat from the hot line, thereby increasing the temperature of the glass surface.

In order to manufacture the heating glass, methods for forming a front heating layer through a sputtering process using a transparent conductive material such as ITO (Indium Tin Oxide) or an Ag thin film and then connecting an electrode to a front end thereof have been proposed. However, the heating glass manufactured by the above-mentioned methods has a problem in that it is difficult to be driven at a low voltage due to high surface resistance. Therefore, an attempt to use a hot line such as a metal line to generate heat at a low voltage has been proposed.

When the metal line is used, it is necessary to minimize a line width of the metal line and an area occupied by the metal line in order to overcome the lowering of transmittance due to the metal line and visually perceptible problem.

In addition to giving a heating function to a glass of the vehicle, a function of blocking solar energy draws attention to reducing a cooling load inside of the vehicle. In order to block the solar energy, it is necessary to adjust transmittance of sunlight. However, when the metal line is used, a function of adjusting the transmittance of the sun light is not provided in other part than the metal line. Therefore, demands for methods for simultaneously implementing heating the transmittance of the sunlight have been increased.

### [Detailed Description of the Invention]

### [Technical Problem]

This application has been made in an effort to provide a heating unit which is capable of adjusting transmittance and a method for manufacturing the same.

### [Technical Solution]

An exemplary embodiment of this application provides a heating unit including: a substrate; a transmittance adjusting layer which is provided on the substrate and includes one or more selected from a group consisting of Ni, Cr, Mo, Pt, and Ti; and a conductive heating pattern provided on the transmittance adjusting layer.

Another exemplary embodiment of this application provides a method for manufacturing a heating unit, including: forming a transmittance adjusting layer which includes one or more selected from a group consisting of Ni, Cr, Mo, Pt, and Ti, on a substrate; forming a conductive heating layer on the transmittance adjusting layer; and forming a conductive heating pattern by etching the conductive heating layer.

Yet another exemplary embodiment of this application provides a heating glass for a vehicle including the above heating unit.

### [Advantageous Effects]

The heating unit according to an exemplary embodiment of this application may easily remove frost and fog of the heating unit while the conductive heating pattern is not visibly recognized and adjust the transmittance of sunlight, thereby preventing the temperature rise in the vehicle. Specifically, the heating performance is excellent at a low voltage so that a heating glass for a vehicle in which the heating performance is uniformly provided on the entire area of the heating unit may be provided. Further, the heating unit according to an exemplary embodiment of this application includes the transmittance adjusting layer between the substrate and the conductive heating pattern, thereby adjusting the transmittance of sunlight and thus performing a tinting function and a sunlight blocking function.

### [Brief Description of Drawings]

FIG. 1 is a view schematically illustrating a heating unit according to an exemplary embodiment of this application and a method for manufacturing the same.
FIG. 2 is a view obtained by measuring transmittance of a heating unit according to an exemplary embodiment of this application.
FIG. 3 is a view obtained by measuring transmittance of a heating unit according to an exemplary embodiment of this application.
FIG. 4 is a view obtained by evaluating a heating phenomenon of a heating unit according to an exemplary embodiment of this application.

### [Best Mode]

Hereinafter, the present invention will be described in detail.

Since frost or fog is formed on a glass surface of a vehicle due to a difference between temperatures of the outside and the inside of the vehicle on winter and rainy days, a hot line is provided on a rear side glass surface of the vehicle. The hot line has excellent electric conductivity, but is opaque so that the hot line is not applied to front and side glass surfaces of the vehicle.

The heating glass for a vehicle has low resistance and low visibility in order to smoothly generate heat, which becomes a serious problem. In order to secure appropriate transmittance, the heating glass of the related art is manufactured by a sputtering method or a CVD method using indium tin oxide (ITO) or fluorine tin oxide (FTO). However, ITO or FTO has a problem in that it does not show sufficient heating performance to remove the frost and fog at a low voltage. Further, in the case of a curved glass such as a vehicle glass, crack is generated so that electric conductivity is sharply lowered.

In order to solve the problem caused by ITO, a study for a sheet heating unit using a carbon nano tube or metal oxide nano wire which has excellent electrical conductivity is being performed. The carbon nano tube has good thermal conductivity and is easily bendable and also maintains the good electrical conductivity even with a large radius of curvature. However, in the sheet heating unit of the related art which is manufactured using a spraying method using the metal oxide nano wire and the carbon nano tube, even though the electric conductivity of individual nano wires or nano tubes which form the heating unit is good, when the nano wire or nano tube is applied on a large area to form the heating unit, there are lots of tube-tube junctions so that a haze is increased. Further, when a sheet resistor having transmittance and a haze value suitable for a front glass of the vehicle is manufactured by the above-described method, a sheet resistance value may be 10 ohm/square or higher. When a voltage of 12 to 14 V output from a battery of the currently used vehicle is applied to the sheet resistor having sheet resistance of 10 ohm/square or higher, a heating value to remove the frost and fog may not be obtained.

Further, most of the heating glasses for the vehicle has high transmittance, so that when a window tinting function is necessary, the glass needs to be additionally coated with a tinting film, which is inconvenient. Therefore, this application provides a heating unit which simultaneously implements a sunlight blocking function and a heating function by forming a pattern having an excellent electric conductivity on a film which is capable of adjusting the transmittance and a method for manufacturing the same.

The heating unit according to an exemplary embodiment of this application includes a substrate, a transmittance adjusting layer which is provided on the substrate and includes one or more selected from a group consisting of Ni, Cr, Mo, Pt, and Ti, and a conductive heating pattern provided on the transmittance adjusting layer.

In the heating unit according to an exemplary embodiment of this application, the transmittance adjusting layer may include a material which has an etching rate which is ten times or more different from that of the conductive heating layer, has visible ray transmittance of 30 to 90% and has a good adhesive force with the substrate and the conductive heating pattern.

In the heating unit according to an exemplary embodiment of this application, the transmittance of the transmittance adjusting layer may vary depending on a thickness. For example, when the transmittance adjusting layer includes Ni, the transmittance may be 80% at a thickness of 2 nm and the transmittance may be 40% at a thickness of 7 nm.

The transmittance adjusting layer may be formed of metal and may include one or more selected from a group consisting of Ni, Cr, Mo, Pt, and Ti.

Further, the transmittance adjusting layer may be a single layer or may have a multilayered structure with two or more layers. The thickness of the transmittance adjusting layer may be determined such that the transmittance of the transmittance adjusting layer is adjusted to be 30 to 90% with respect to the thickness of 550 nm. Desirably, the thickness is larger than 0 and 10 nm or smaller.

Further, the transmittance of the transmittance adjusting layer may be 30 to 99% with respect to the thickness of 550 nm, but is not limited thereto. Color of the transmittance adjusting layer may be gradually changed to be transparent from dark blue as the transmittance is increased.

In the heating unit according to the exemplary embodiment of this application, the thickness of the conductive heating pattern may be 500 nm to 20 µm, but is not limited thereto. With respect to the area of the transmittance adjusting layer, an area occupied by the conductive heating pattern may be 30% or lower, and desirably 10% or lower.

The heating unit according to the exemplary embodiment of this application may further include two bus bars provided to apply voltages to both terminals of the conductive heating pattern.

In the heating unit according to the exemplary embodiment of this application, when the conductive heating pattern is electrically connected to the bus bars to apply the voltage to the bus bars, the conductive heating pattern may refer to a unit which generates heat by its resistance and thermal conductivity. As the heating unit, a linearly formed conductive material may be used. When a linear heating unit is provided, the heating unit may be formed of a transparent or opaque conductive material. In this application, when the linear heating unit is provided, even though the material is an opaque material such as metal, the linear heating unit may be configured such that a field of vision is not obstructed by adjusting a line width or uniformity of the pattern as it will be described below.

In the specification, for the convenience of description, when the linear heating unit is provided, the heating unit is referred to as a conductive heating line.

In the exemplary embodiment of this application, the conductive heating line may be formed of the straight lines, or various modifications such as curved lines, wave lines, and zigzag lines may be feasible.

The printing pattern may include a pattern such as stripe, diamond, a square lattice, a circle, a wave pattern, a grid, a 2-D grid, and the like but is not limited to a predetermined form. It is desirably designed so that light that is emitted from a predetermined light source does not suppress optical properties by diffraction and interference. That is, in order to minimize the regularity of the pattern, the spacing of a wave pattern, a sine wave, and a lattice structure and the pattern where the line thickness is made non-uniform may be used. If necessary, a shape of the conductive heating pattern may be a combination of two or more patterns.

The conductive heating pattern may include an irregular pattern.

The irregular pattern may include a pattern in which, when a straight line intersecting the conductive heating line is drawn, a ratio (distance distribution ratio) of a standard deviation with respect to an average value of distances between adjacent intersection points of the straight line and the conductive heating line is 2% or more.

The straight line that intersects the conductive heating line may be a line having the smallest standard deviation of distances between adjacent intersection points of the straight line and the conductive heating line. Alternatively, the straight line that intersects the conductive heating line may be a straight line which is extended in a direction vertical to the tangential line of any one point of the conductive heating line. It is possible to prevent side effects caused by the diffraction and interference of a light source by using the conductive heating pattern in this manner.

The straight line that intersects the conductive heating line may have 80 or more intersection points with the conductive heating line.

The ratio (distance distribution ratio) of the standard deviation to the average value of distances between the adjacent intersection points of the straight line intersecting the conductive heating line and the conductive heating line may be 2% or more, 10% or more, or 20% or more.

Another type of conductive heating pattern may be provided on at least a part of a surface of the substrate that is provided with the conductive heating pattern described above.

According to an exemplary embodiment of this application, the irregular pattern may include a pattern that is formed of closed figures in which a distribution is continuous and of which a ratio (area distribution ratio) of standard deviation with respect to an average value of areas of the closed figures is 2% or more. It is possible to prevent side effects caused by the diffraction and interference of a light source by using the conductive heating line pattern in this manner.

At least 100 closed figures may be present.

The ratio of standard deviation with respect to an average value of areas of the closed figures (area distribution ratio) may be 2% or more, 10% or more, and 20% or more.

A conductive heating pattern having a different form may also be provided on at least a part of the surface of the transparent substrate with a conductive heating pattern , in which the ratio of standard deviation with respect to an average value of areas of the closed figures (area distribution ratio) is 2% or more.

When the patterns are completely irregular, in the distribution of the line, there may be a difference between a loose portion and a dense portion thereof. The distribution of the lines may cause a problem that the line is visible however thin the line width is. In order to solve the visual perceptibility problem, this application may appropriately harmonize regularity and irregularity when a conductive heating pattern is formed. For example, a basic unit may be determined such that the conductive heating line may not be visible or a local heating may not occur, and a conductive heating line may be formed with an irregular pattern within the basic unit. When the above-described method is used, visuality may be complemented by allowing the distribution of lines not to be concentrated at any one point.

According to an exemplary embodiment of this application, the irregular pattern may include a conductive heating pattern having a boundary form of figures forming a Voronoi diagram.

It is possible to prevent the Moire and minimize side effects caused by the diffraction and interference of light by forming the conductive heating pattern in the form of a boundary of figures forming a Voronoi diagram. The Voronoi diagram is a pattern formed in a system in which when points called the Voronoi diagram generator are disposed in a region to be filled, a region, in which each point is closest in distance to the corresponding point compared to the distance between the point and the other points, is filled. For example, when nationwide big discount stores are represented by points and customers are supposed to visit a big discount store which is the closest to each customer, a pattern that represents the trading area of each discount store may be taken as an example. That is, if the space is filled with a regular hexagon and each dot of the regular hexagon is selected by the Voronoi generator, the conductive heating pattern may be a honeycomb structure. In this application, when the conductive heating pattern is formed by using a Voronoi diagram generator, there is an advantage in that the complex pattern form that can minimize the side effects due to the diffraction and interference of light can be easily determined.

A pattern derived from the generator may be used by regularly or irregularly disposing the position of the Voronoi diagram generator.

Even when the conductive heating pattern is formed in a boundary form of the figures that forms the Voronoi diagram, as described above, in order to solve the visual perceptibility problem, the regularity and irregularity may be appropriately harmonized when the Voronoi diagram generator is generated. For example, after an area having a predetermined size is designated as a basic unit in an area in which the pattern will be formed, points may be produced such that the distribution of points in the basic unit has irregularity, and then the Voronoi pattern may also be manufactured. When the above-described method is used, visuality may be complemented by allowing the distribution of lines not to be concentrated at any one point.

As described above, it is possible to control the number of Voronoi diagram generators per unit area in order to consider the visuality of the heating line or fit the thermal density required for a display device. At this time, when the number of Voronoi diagram generators per unit area is controlled, the unit area may be 5 cm² or less, or 1 cm² or less. The number of Voronoi diagram generators per unit area may be selected within a range from 25 to 2,500 ea/cm², and from 100 to 2,000 ea/cm².

At least one of figures forming the pattern in a unit area may have a form different from the other figures.

According to an exemplary embodiment of this application, the irregular pattern may include a conductive heating pattern of a boundary form of figures formed of at least one triangle forming a Delaunay pattern.

Specifically, the form of the conductive heating pattern is a boundary form of the triangles forming the Delaunay pattern, a boundary form of the figures that are formed of at least two triangles forming the Delaunay pattern or a combination form thereof.

It is possible to minimize the Moire phenomenon and side effects caused by the diffraction and interference of light by forming the conductive heating pattern in the form of a boundary of figures formed of at least one triangle forming a Delaunay pattern. The Delaunay pattern is a pattern formed by drawing a triangle by disposing points called a Delaunay pattern generator in a region in which a pattern is to be filled and connecting three points positioned around the points with each other, in which a circumcircle including all the vertices of the triangle is drawn, such that other points are not present in the circumcircle. In order to form such a pattern, the Delaunay triangulation and the circulation may be repeated based on the Delaunay pattern generator. The Delaunay triangulation may be performed in a system in which a triangle of a slim body is avoided by maximizing the smallest angle of all the angles of the triangle. The concept of the Delaunay pattern was proposed by Boris Delaunay in 1934.

The pattern of the boundary form of figures formed of at least one triangle forming the Delaunay pattern may use a pattern derived from the generator by regularly or irregularly positioning the Delaunay pattern generator. In this application, when the conductive heating pattern is formed by using the Delaunay pattern generator, there is an advantage in that a complicated pattern form may be easily determined.

Even in the case where the conductive heating pattern is formed in a boundary form of the figures that are formed of at least one triangle forming the Delaunay pattern, the regularity and irregularity may be appropriately harmonized when the Delaunay pattern generator is generated in order to solve the visual perceptibility problem as described above.

The number of Delaunay pattern generators per unit area may be controlled in order to consider the visuality of the heating line or fit the thermal density required for a display device. At this time, when the number of Delaunay pattern generators per unit area is controlled, the unit area may be 5 cm² or less, and 1 cm² or less. The number of Delaunay pattern generators per unit area may be selected within a range from 25 to 2,500 ea/cm², and from 100 to 2,000 ea/cm².

At least one of figures forming the pattern in a unit area may have a form different from the other figures.

For the uniform heating and visibility of the heating unit, an aperture ratio of the conductive heating pattern may be constant in the unit area. A transmittance deviation of the heating unit may be 5% or less in respects to a predetermined circle that has the diameter of 20cm. In this case, the heating unit may prevent the local heating. In addition, in the heating unit, after the heating, the standard deviation of the surface temperature of the substrate may be within 20%. However, for a specific purpose, the conductive heating pattern may be disposed to cause temperature deviation in the heating unit.

The conductive heating pattern may be formed so that the area of the pattern that is formed of the figures having the asymmetric structure is 10% or more of the entire pattern area in order to maximize the minimization of side effects by the diffraction and interference of light. In addition, the conductive heating pattern may be formed so that the area of the figures in which at least one of the lines that connect a central point of any one figure that forms the Voronoi diagram and a central point of the adjacent figure forming the boundary in conjunction with the figure is different from the remaining lines in view of length is 10% or more of the entire conductive heating line pattern area. Further, the conductive heating pattern may be formed such that the area of the pattern formed of the figures in which the length of at least one side that forms the figure that is formed of at least one triangle forming the Delaunay pattern is different from the length of the other sides is 10% or more with respect to the area in which the entire conductive heating pattern is formed.

When the conductive heating pattern is manufactured, the pattern is designed in a limited area, and then a large area pattern may be manufactured by using the method in which the limited area is repeatedly connected. In order to repeatedly connect the patterns, the repetitive patterns may be connected to each other by fixing the positions of the points of each quadrilateral. At this time, the limited area may be an area of 1 cm² or more, and 10 cm² or more in order to minimize the diffraction and interference of light by the repetition.

In this application, after determining a desired pattern type first, a precise conductive heating pattern that has a small line width may be formed using a printing method, a photolithography method, a photography method, a method using a mask, a sputtering method, or an inkjet method. When the pattern type is determined, the Voronoi diagram generator or Delaunay pattern generator may be used, so that a complex pattern form may be easily determined. Here, the Voronoi diagram generator and Delaunay pattern generator mean the dots that are disposed so that the Voronoi diagram and Delaunay pattern generator are formed as described above. However, the scope of this application is not limited thereto, and another method may be used when the desired pattern type is determined.

The printing method may be performed in a manner in which a paste including a conductive heating pattern material is transferred onto a substrate with a target pattern type, and then sintered. The transferring method is not particularly limited, but the aforementioned pattern type may be formed on a pattern transferring medium such as an intaglio or a screen and the desired pattern may be transferred onto the transmittance adjusting layer by using the pattern type. The method of forming a pattern type on a pattern transferring medium may use a method known in the art.

The printing method is not particularly limited, and a printing method such as an offset printing, a screen printing, a gravure printing and the like may be used. The offset printing may be performed by using the method in which after the paste is filled in the intaglio on which the pattern is formed, first transferring is performed by using silicon rubber that is called as the blanket, and the second transferring is performed by closely contacting the blanket and the substrate. The screen printing may be performed in a manner in which after positioning a paste on a screen with a pattern, the paste is positioned directly on the transmittance adjusting layer through a screen with an empty space while pushing a squeegee. The gravure printing may be performed by using the method in which after the paste is filled in the pattern while the blanket where the pattern is formed on the roll is wound, it is transferred onto the transmittance adjusting layer. In this application, the above method may be used and the above methods may be used in combination. In addition, other printing methods that are known to those who skilled in the art may be used.

In the case of the offset printing method, since most of the paste is transferred onto the transmittance adjusting layer due to the release property of the blanket, a separate blanket washing process is not required. The intaglio may be manufactured by precisely etching the glass on which the desired conductive heating line pattern is formed, and metal or DLC (diamond-like carbon) coating may be performed on the glass surface for durability. The intaglio may be manufactured by etching the metal plate.

In this application, in order to implement a more precise conductive heating pattern, the offset printing method may be used. The offset printing method is performed by filling the pattern of the intaglio with the paste by using a doctor blade as a first step, performing a first transfer by rotating the blanket, and as a second step, performing a second transfer on the transmittance adjusting layer by rotating the blanket.

This application is not limited to the above-described printing method and the photolithography process may also be used. For example, the photolithography process may be performed by forming a conductive heating layer on a front surface of the transmittance adjusting layer, forming a photoresist layer thereon, patterning the photoresist layer by the selective exposure and the development process, then patterning the conductive heating layer by etching the conductive heating layer using the patterned photoresist layer as a mask, and removing the photoresist layer.

The conductive heating pattern may also be formed by subjecting a metal thin film such as copper, aluminum and silver to lamination using an adhesion layer. In addition, the conductive heating pattern may also be a metal pattern formed on the transmittance adjusting layer by using sputtering or a physical vapor deposition method. In this case, the conductive heating pattern may include one or more selected from a group consisting of copper, aluminum, silver, and an alloy thereof.

In this application, a photoresist layer may also be formed by using the printing process instead of the photolithography process in the above photolithography process.

This application may also use a method using a mask. For example, after disposing a mask having a heating pattern shape to be close to the transmittance adjusting layer, the mask may also be patterned by depositing the conductive heating pattern material on the transmittance adjusting layer. In this case, the depositing method may adopt a heat deposition method by heat or electron beam, a PVD (physical vapor deposition) method such as sputter, and a CVD (chemical vapor deposition) method using an organometal material.

When the conductive heating pattern is used by using the etching, the transmittance adjusting layer and the conductive heating layer are etched to obtain the conductive heating pattern. In the above process, an etching speed of the transmittance adjusting layer may be ten times or slower or 100 times or slower than an etching speed of the conductive heating layer. In order to satisfy the above-described process, an etchant may include one or more of phosphoric acid, nitric acid, sulfuric acid, and acetic acid. Further, the etchant may include FeCl₃, CuCl₂, hydrogen peroxide, and persulfate and an additive may be included between the transmittance adjusting layer and the conductive heating layer to control Galvanic reaction. The additive may use imidazole, azole, and thiourea.

In an exemplary embodiment of this application, the substrate is not particularly limited, but the light transmittance thereof may be 50% or more, and 75% or more. Specifically, as the substrate, a glass substrate may also be used, and a plastic substrate or plastic film may be used. When the plastic film is used, after forming the conductive heating pattern, glass may be bonded on at least one surface of the substrate. In this case, the glass or the plastic substrate may be bonded on a surface of the substrate on which the conductive heating pattern is formed. As the plastic substrate or film, a material known in the art may be used, and examples thereof include a film having a visible light transmittance of 80% or more, such as PET (polyethylene terephthalate), PVB (polyvinylbutyral), PEN (polyethylene naphthalate), PES (polyethersulfon), PC (polycarbonate), and acetyl celluloid. The thickness of the plastic film may be 12.5 to 500 µm, and 50 to 250 µm.

In the exemplary embodiment of this application, as a material for the conductive heating pattern, metal that has excellent thermal conductivity may be used. In addition, a specific resistance value of the conductive heating line material may be 1 µΩcm to 200 µΩcm. Specific examples of the conductive heating line material may include one or more selected from a group consisting of copper, aluminum, silver, and an alloy thereof, but are not limited thereto. Further, the material for the conductive heating pattern may be used in a particle form. In this application, as the material for the conductive heating pattern, copper particles that are coated with silver may be used.

The line width of the conductive heating pattern may be 100 µm or smaller, may be 30 µm or smaller, and further may be 25 µm or smaller, and 10 µm or smaller, more desirably 7 µm or smaller, or 5 µm or smaller. The line width of the conductive heating pattern may be 0.1 µm or larger, and 0.2 µm or larger. The interval between lines of the conductive heating pattern may be 30 mm or smaller, 0.1 µm to 1 mm, 0.2 µm to 600 µm, and 250 µm or smaller.

In this application, the uniformity of the conductive heating pattern may be in the range of ±3 µm in the case of the line width and in the range of ±1 µm in the case of the line height.

The heating unit according to the exemplary embodiment of this application may further include a power source connected to the bus bars. The bus bar may be simultaneously formed with the formation of the conductive heating unit, and may be formed by using the same or different printing method after forming the conductive heating pattern. For example, after forming the conductive heating pattern by using an offset printing method, the bus bar may be formed through screen printing. In this case, the thickness of the bus bar may be 1 µm to 100 µm and 10 µm to 50 µm. The connection between the bas bar and the power source may be achieved through soldering, or physical contact with a structure having good conductive heating.

The bus bar may be formed of the same material as the above-described material which forms the conductive heating pattern. More specifically, the bus bar may include a metal selected from a group consisting of copper, aluminum, silver, platinum, molybdenum, nickel, chrome, and titanium or an alloy thereof, but is not limited thereto.

Further, the bus bar may be formed using a conductive tape which includes a metal selected from a group consisting of copper, aluminum, silver, platinum, molybdenum, nickel, chrome, and titanium or an alloy thereof.

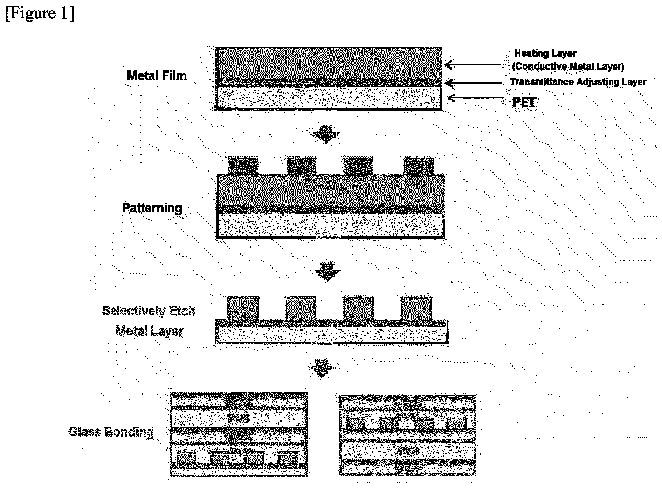

The heating unit according to one exemplary embodiment of this application and a method for manufacturing the same are schematically illustrated in FIG. 1. More specifically, FIG. 1 is a view illustrating a heating unit which includes a substrate, a transmittance adjusting layer provided on the substrate, and a conductive heating pattern provided on the transmittance adjusting layer and a method for manufacturing the same.

According to an exemplary embodiment of this application, a transparent substrate may be further included on the heating unit. That is, an additional transparent substrate may be included on a surface of the substrate on which the transmittance adjusting layer and the conductive heating pattern are provided. As the additionally provided transparent substrate, as described above, a glass substrate, a plastic substrate or film may be used. When the additional transparent substrate is bonded, a bonding film may be interposed between the conductive heating pattern and the additional transparent substrate. Temperature and pressure may be controlled during the bonding process.

According to an exemplary embodiment of this application, the bonding film and the transparent substrate may be further included below the substrate. In this case, the bonding film may be in contact with the substrate.

Here, any material that has an adhesive strength and is transparent after being bonded may be used as the material of the bonding film. For example, a PVB film, an EVA film, a PU film and the like may be used, but the material of the bonding film is not limited thereto. The bonding film is not particularly limited, but its thickness may be in the range of 100 µm to 800 µm.

In one specific embodiment, an attachment film is inserted between the transparent substrate on which the conductive heating pattern is formed and the additional transparent substrate, and they are put into a vacuum bag to reduce a pressure or raise a temperature using a hot roll, thus removing the air, thereby accomplishing first bonding. In this case, the pressure, temperature and time may vary according to the kind of the attachment film, and in general, the temperature may be gradually increased from a normal temperature to 100°C at a pressure of 300 to 700 Torr. In this case, the time may be generally within one hour. A secondary bonding process is performed on a preliminarily bonded laminated structure on which the first bonding is finished by an autoclaving process where the temperature is increased while applying the pressure in the autoclave. The secondary bonding varies according to the kind of the attachment film, but after performing the attachment at the pressure of 140 bar or more and the temperature in the range of 130 to 150°C for 1 to 3 hours, and desirably approximately 2 hours, it is slowly cooled.

In another exemplary embodiment, the method for bonding them through one step by using the vacuum laminator device unlike the above two step bonding processes may be used. The bonding may be performed by raising the temperature step by step to 80 to 150°C and slowly cooling them so that the pressure is reduced (to 5 mbar) until the temperature is 100°C and thereafter the pressure is applied (to 1,000 mbar).

As described above, a structure in which an additional transparent substrate is included above or below the heating unit according to the exemplary embodiment of this application is schematically illustrated in FIG. 1.

The heating unit according to an exemplary embodiment of this application may have a shape of curved surface.

In the heating unit according to an exemplary embodiment of this application, when the heating unit has a linear shape, an aperture ratio of the conductive heating pattern, that is, a ratio of an area which is not covered by the pattern may be 90% or higher. The heating unit according to this application has an aperture ratio of 90% or higher and an excellent heating property where the temperature is increased while maintaining temperature deviation within 5 mins after heating operation at 10% or less.

The heating unit according to an exemplary embodiment of this application may be connected to the power source to generate heat. In this case, the heating value per m² may be 700W or lower, or 300 W or lower, or 100 W or higher. Since the heating unit according to an exemplary embodiment of this application has an excellent heating performance even at the low voltage, for example, 30 V or less, or 20V or less, it may be usefully used in vehicles and the like. The resistance in the heating unit may be 5 Ω/square or lower, 1 Ω/square or lower, or 0.5 Ω/square or lower. The heating unit according to an exemplary embodiment of this application may be applied to glass that is used for various transport means such as vehicles, ships, railroads, high-speed railroads, and airplanes, houses or other buildings or a display device. In particular, since the heating unit according to an exemplary embodiment of this application has an excellent heating property at a low voltage, can minimize side effects by diffraction and interference of a light source after sunset, and can be invisible in the above line width, unlike the related art, it may be applied to the front window for transportation means such as vehicles.

That is, the heating unit according to an exemplary embodiment of this application may be desirably applied to a heating glass for a vehicle.

Further, the heating unit according to an exemplary embodiment of this application includes the transmittance adjusting layer between the substrate and the conductive heating pattern, thereby adjusting the transmittance of the heating unit and thus blocking the sunlight.

Further, the method for manufacturing a heating unit according to an exemplary embodiment of this application includes forming a transmittance adjusting layer including one or more selected from a group consisting of Ni, Cr, Mo, Pt, and Ti on a substrate, forming a conductive heating layer on the transmittance adjusting layer, and forming a conductive heating pattern by etching the conductive heating layer.

In the method for manufacturing a heating unit according to an exemplary embodiment of this application, specific materials and a forming method of the substrate, the conductive heating pattern, and the transparent adjusting layer are the same as described above, so that detailed description thereof will be omitted.

Further, the method for manufacturing a heating unit according to an exemplary embodiment of this application may further include forming a transmittance adjusting pattern by etching the transmittance adjusting layer after the forming of the conductive heating pattern.

### [Mode for Invention]

Hereinafter, the present invention will be described in more detail with reference to the Examples. However, the following Examples are set forth to illustrate the present invention, but the scope of the present invention is not limited thereto.

### <Examples>

### <Example 1>

A transmittance of a tinting film for a vehicle is required to be at least 40 to 70% or higher. A sample (10 cm X 10 cm) plated with 2 µm of Cu is manufactured after depositing an Ni layer with a thickness of 2 nm. In order to check whether a Cu attaching property, an etching speed, and an optical property of the samples are changed as the thickness of Ni is reduced, an experiment is performed.

After performing a plasma treatment on a metal surface and then printing a Voronoi pattern, the Ni layer is dried for five minutes at 140°C and etched at 45°C using etchant.

### <Example 2>

Except adjusting the thickness of the Ni layer to be 4.5 nm in Example 1, the same process as Example 1 is performed.

### <Example 3>

Except adjusting the thickness of the Ni layer to be 7 nm in Example 1, the same process as Example 1 is performed.

### <Comparative Example 1>

Except the forming of a Ni layer in Example 1, the same process as Example 1 is performed.

### <Experimental Example 1>

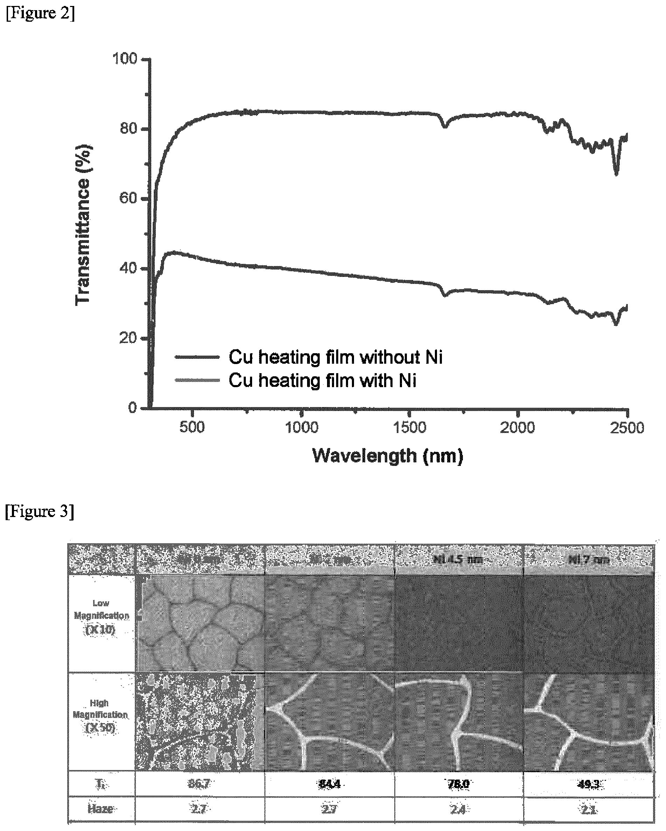

Transmittances of the heating units manufactured in Examples 1 to 3 and Comparative Example 1 are measured and the result is illustrated in FIGS. 2 and 3.

As represented in the result of FIG. 3, since the transmittance is increased as the thickness of Ni is reduced, transmittance of 80% or higher is measured when the thickness of Ni is lowered to be 2 nm or smaller. When Ni is 7 nm, the transmittance is lowered to be 50%, but similar etching speed and attachment property are obtained regardless of the thickness of Ni.

### <Experimental Example 2>

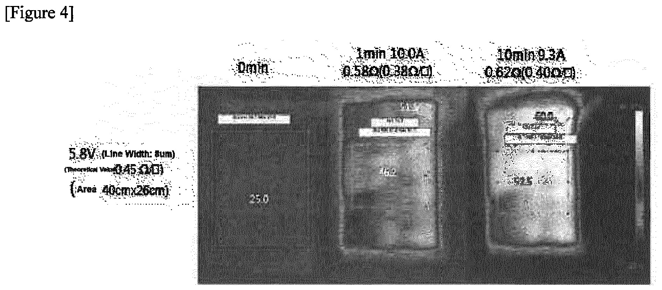

A heating phenomenon of the heating unit manufactured in Example 3 is evaluated and then illustrated in FIG. 4. More specifically, FIG. 4 illustrates the measured heating property of a heating film manufactured with 7 nm of Ni and a phenomenon in which heat is uniformly generated on an area of 40 cm X 26 cm is measured by an infrared camera.

As the above-described result, the heating unit according to an exemplary embodiment of this application may easily remove frost and fog of the heating unit while the conductive heating pattern is not visibly recognized and adjust the transmittance of sunlight, thereby preventing the temperature from increasing in the vehicle. Specifically, the heating performance is excellent at a low voltage so that a heating glass for a vehicle in which the heating performance is uniformly provided on the entire area of the heating unit may be provided. Further, the heating unit according to an exemplary embodiment of this application includes the transmittance adjusting layer between the substrate and the conductive heating pattern, thereby adjusting the transmittance of sunlight and thus performing a tinting function and a sunlight blocking function.

## Claims

1. A heating unit, comprising:
a substrate;
a transmittance adjusting layer which is provided on the substrate and includes one or more selected from a group consisting of Ni, Cr, Mo, Pt, and Ti; and
a conductive heating pattern provided on the transmittance adjusting layer.

2. The heating unit of claim 1, wherein a thickness of the transmittance adjusting layer is larger than 0 and 10 nm or smaller.

3. The heating unit of claim 1, wherein the transmittance of the transmittance adjusting layer is 30 to 99% with respect to 550 nm.

4. The heating unit of claim 1, wherein a thickness of the conductive heating pattern is 500 nm to 20 µm.

5. The heating unit of claim 1, wherein the conductive heating pattern includes a conductive metal line.

6. The heating unit of claim 1, wherein the conductive heating pattern includes one or more selected from a group consisting of copper, aluminum, silver, and an alloy thereof.

7. The heating unit of claim 1, further comprising:
two bus bars provided to apply voltage to both terminals of the conductive heating pattern.

8. The heating unit of claim 1, wherein the substrate is a glass substrate or a plastic substrate.

9. The heating unit of claim 1, further comprising:
a transparent substrate on the heating unit.

10. The heating unit of claim 9, further comprising:
a bonding film between the heating unit and the transparent substrate.

11. The heating unit of claim 1, further comprising:
a bonding film and a transparent base member below the substrate.

12. The heating unit of claim 1, wherein a sheet resistance of the heating unit is 5 Ω/square or lower.

13. A method for manufacturing a heating unit, the method comprising:
forming a transmittance adjusting layer which includes one or more selected from a group consisting of Ni, Cr, Mo, Pt, and Ti, on a substrate;
forming a conductive heating layer on the transmittance adjusting layer; and
forming a conductive heating pattern by etching the conductive heating layer.

14. The method of claim 13, further comprising:
after the forming of a conductive heating pattern, forming a transmittance adjusting pattern by etching the transmittance adjusting layer.

15. A heating glass for a vehicle:
comprising the heating unit of any one of claims 1 to 12.
